# EUROPEAN PATENT APPLICATION

(11) **EP 1 985 431 A1**
(43) Date of publication of application: **29.10.2008**
(21) Application number: 07106851.4
(22) Date of filing: 24.04.2007
(51) Int. Cl.: B29C 44/04

(54) **A method for manufacturing latex mattresses and mattresses thus obtained**

(71) Applicant: Ecolatex S.r.l., 20020 Misinto (IT)
(72) Inventor: Ballotta, Mario, 20091 Bresso (IT); Caschetto, Giovanni, 20052 Monza (IT); Didone, Veronica, 20010 Cardano al Campo (IT)
(74) Representative: Gervasi, Gemma

(57) **Abstract**

A method for manufacturing latex mattresses is described characterised by the introduction of at least one semifinished vulcanised latex portion in moulds prior to the injection of the latex so that the resulting product, entirely formed by latex, is made coherent without the use of further adhesive substances. Furthermore, there is described a mattress (1) characterised by at least one area (2) having certain physical-mechanical properties and colour so as to be safe, more comfortable and easily distinguishable with respect to other mattresses characterised by other physical-mechanical properties.

## Description

The present invention relates to a method for manufacturing latex mattresses and to mattresses thus obtained.

Latex mattresses have now been used for years for their high performances and durability features. The manufacturing process of such artefacts (so-called Dunlop process) contemplates that the latex foam is injected into moulds, vulcanised and dried.

It is known the need to vary the performance features of the mattresses to account for human anatomy. For example, it is useful that the part of the mattress corresponding to the humeral area is particularly soft to allow greater postural comfort on the hips, allowing the humerus to sink deeply into the mattress, on the other hand the area corresponding to the pelvis needs to offer more support.

In order to obtain such features, a known method contemplates to vary the softness in some areas altering the volume of the tips present in the latex foam. However, this solution is not optimal because it is not possible to vary the features of the mix in the various areas of the mattress, it only acts on the apparent density.

Another method contemplates that two or more injectors connected to two different latex mix tanks inject the latex within the same mould at the same time, in order to vary the mechanical features of the product, in relation to certain areas of concern, in virtue of the use of two different latex mix.

This method is also not optimal due to the impossibility of determining the distribution, i.e. the shape, that the latex injected by one injector will acquire with respect to the rest.

Mattresses made using a latex the mix of which presents specific self-extinguishing features when exposed to fire are known. The mattresses made entirely with such a latex do not guarantee the optimal mechanical and comfort features, in addition to be heavier and more costly with respect to the normal ones.

It is therefore the object of the present invention to overcome all the aforesaid drawbacks and to indicate a method for manufacturing latex mattresses which have well-defined portions having certain performance properties in relation to the comfort features to be obtained.

It is the object of the present invention a method for manufacturing a latex mattress characterised in that it comprises the following steps:
- a first step in which at least one semifinished latex portion is obtained by a preliminary injection and vulcanisation of a foam having a certain composition;
- a second step in which said at least one semifinished latex portion is inserted in a larger mould, there being thus injected in said larger mould other latex having different composition from that used in said first step, thus obtaining said latex mattress in which said at least one semifinished latex portion adheres perfectly to said other latex.

It is a further object of the present invention to provide a mattress obtained by said method.

It is a particular object of the present invention to provide a method for manufacturing latex mattresses and mattresses as described in greater detail in the claims, which form an integral part of the present description.

Further objects and advantages of the present invention will be apparent from the following detailed description of an embodiment of the same (and its variants) and from the accompanying drawing provided by way of mere non-limitative example, in which:

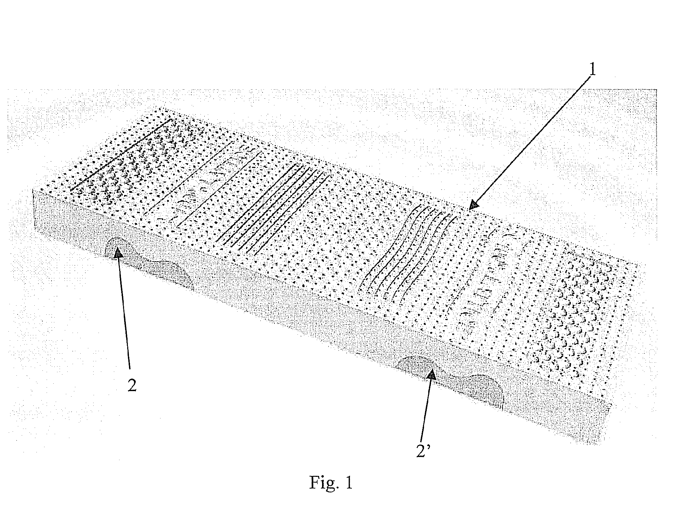

figure 1 shows an example of mattress 1 with two embedded portions of latex 2 and 2' having different colour and mechanical properties with respect to the remaining latex arranged symmetrically with respect to the shorter median.

The method object of the present invention comprises the implementation of the first two steps of manufacturing, i.e. injecting and vulcanisating, for the manufacture of (semifinished) latex portions characterised by certain physical-mechanical properties. A specific colouring is preferably added so as to establish a biunivocal relation between colour and physical-mechanical properties.

At the end of the step of vulcanising, in any moment of the following drying step, or at the end of the latter, these semifinished portions are inserted in another larger mould for the following injection, so that said semifinished portions remain embedded in the following injection.

A complete injection, vulcanisation and drying cycle of the complete product is thus repeated.

A finished product, in which the semifinished workpieces adhere directly to the following latex injection without being altered, is obtained in this manner.

In the preferred embodiment in figure 1, two latex portions having different physical-mechanical properties and colour are inserted parallelly to the short sides and symmetrically with respect to the shorter median. Said portions confer a particular softness to the mattress at the humeral area of the user.

In another preferred embodiment, the latex portion which is inserted in the mould before the following injection consists of a thin, possibly self-extinguishing latex sheath which entirely covers one of the larger sides of the mattress, so as to provide it with the self-extinguishing property without affecting product costs, weight and comfort.

In a further preferred embodiment, portions having different physical-mechanical properties and colour are inserted in the same mattress to account for the different anatomic features of the human body while, for instance, at the same time a larger face is covered by the self-extinguishing layer.

In general, it is possible to obtain the most varied combination of latex portions in relation to their precise shape and mechanical properties, by preventively producing semifinished workpieces even having very different features.

Said portions may be indiscriminately either made with dedicated moulds or cut from larger portions.

For example, it is possible to make one or more areas with latex mix having the features of a pillow.

Or it is possible to make one or more areas with delayed hysteresis effect latex mix.

Or it is possible to make a mattress with natural latex mix areas and synthetic mix areas.

Or it is possible to make the artefact capable of passing self-extinguishing tests by using a suitable layer.

The advantages deriving from the application of the present invention are apparent, i.e. it is possible to vary the physical-mechanical features of well-defined, confined areas of the latex mattresses without introducing the use of further substances, except from latex, which could be harmful for human health.

Furthermore, it is possible to visually recognise the semifinished workpieces in relation to colour both before and after they are embedded in the following injection, thus limiting the identification and storage problems.

From the description above, a person skilled in the art will be capable of implementing the object of the invention without introducing further details.

Specifically, machinery and devices of known type may be used for the manufacture of both the semifinished and the finished products.

## Claims

1. A method for manufacturing a latex mattress **characterised in that** it comprises the following steps:
- a first step in which at least one semifinished latex portion is obtained by a preliminary injection and vulcanisation of a foam having a certain composition;
- a second step in which said at least one semifinished latex portion is inserted in a larger mould, there being thus injected in said larger mould other latex having different composition from that used in said first step, thus obtaining said latex mattress in which said at least one semifinished latex portion adheres directly to said other latex.

2. A method according to claim 1, **characterised in that** a specific colouring is added to each latex composition, so that the colour of said portions is univocally associated to the physical-mechanical properties of the obtained product.

3. A method according to claim 1, **characterised in that** said at least one semifinished latex portion is inserted in said larger mould at the end of the vulcanisating step in any moment of the following step of drying or after the latter is completed.

4. A method according to claim 1, **characterised in that** said at least one semifinished latex portion is formed by self-extinguishing latex.

5. A method according to claim 1, **characterised in that** said at least one semifinished latex portion is formed by a latex mix with pillow features.

6. A method according to claim 1, **characterised in that** said at least one semifinished latex portion is formed by a delayed hysteresis effect latex mix.

7. A method according to claim 1, **characterised in that** said at least one semifinished latex portion of said other latex having different composition are formed by natural mix or synthetic mix latex.

8. A method according to claim 1, **characterised in that** latex portions having different colours and/or physical-mechanical properties are inserted in the same mould at the same time before the following injection.

9. A method according to claim 1, **characterised in that** the shape of said portions may be determined either by means of dedicated moulds or by cutting from larger portions.

10. A latex mattress manufactured with a method according to any of the preceding claims.
